# EUROPEAN PATENT APPLICATION

(11) **EP 3 828 791 A1**
(43) Date of publication of application: **02.06.2021**
(21) Application number: 19841670.3
(22) Date of filing: 20.03.2019
(51) Int. Cl.: G06Q 10/06, B60L 53/00

(54) **MOBILE POWER BANK SCHEDULING METHOD AND SYSTEM, AND SCHEDULING SERVER AND DEVICE**

(30) Priority: 26.07.2018 CN 201810836507
(71) Applicant: NIO (ANHUI) HOLDING CO., LTD, Economic and Technological Development Zone Hefei Anhui 230601 (CN)
(72) Inventor: YANG, Chao, Shanghai 201804 (CN); CHEN, Jiong, Shanghai 201804 (CN); ZHAO, Jianzhi, Shanghai 201804 (CN)
(74) Representative: Patentwerk B.V.
(86) International application number: PCT/CN2019/078847
(87) International publication number: WO 2020/019737

(57) **Abstract**

Provided are a scheduling method and system for a mobile power bank, a scheduling server, and a device, which relate to the field of battery charging and swapping for electric vehicles, and aim to solve the problem that the number and distribution of charging piles and charging stations cannot meet the requirements. The above scheduling method for a mobile power bank supports a sharing mode and a self-service mode. In the sharing mode, a user end (30) initiates a charging request after parking at any position, and a server (10) broadcasts a charging order for a service terminal (40) to obtain, or selects a service terminal (40) by assigning an order, so that a vehicle to be charged is charged. In the self-service mode, the user end (30) selects a mobile power bank (20) and initiates a charging request, and after confirmation by the server (10), a user completes charging by himself/herself or with the assistance of a service executor requested through the user end (30). A reclaiming management method is further proposed, forming a complete solution, thereby solving difficulties in finding charging piles and charging stations, and alleviating range anxiety of a user.

## Description

### Technical Field

The invention relates to the field of battery charging and swapping for electric vehicles, and in particular to a scheduling method and system for a mobile power bank, a scheduling server, and a device.

### Background Art

As clean-energy vehicles, electric vehicles have good application prospects. However, electric vehicles still face "difficulties in charging" in the process of promotion and use:
(1) Charging piles are difficult to find, and a vehicle owner does not know where to charge.
(2) Charging piles are not easy to use, with poor compatibility, and inconvenient use and billing.
(3) Charging piles are not easy to install. Due to limitations on parking space and electric capacity, there would be more or less obstructions during approval and installation of household charging piles and direct-current fast charging piles.
(4) The charging stations are sparsely distributed, which cannot meet the timely charging requirements.
(5) The vehicle owner has range anxiety, that is, the vehicle owner worries that electricity would be running out suddenly when driving an electric vehicle, which will cause mental pain or anxiety.

In view of the above problems, a valet energy replenishment mode can solve the above problems to a certain extent, but the valet energy replenishment mode has the following disadvantages:
The service personnel need to drive the vehicle of the vehicle owner to replenish energy, and the vehicle owner may have concerns. It is also troublesome to deal with problems such as vehicle bumps in the process of a valet service. Due to the need for a large number of valet service personnel, the single service cost is still high.

### Summary of the Invention

In order to solve the above problems in the prior art, the invention proposes a scheduling method and system for a mobile power bank, a scheduling server, and a device, which effectively solves difficulties in charging due to insufficient charging points.

According to an aspect of the invention, a scheduling method for a mobile power bank is proposed, comprising the following steps:
step S 10: receiving charging request information initiated by a user end, the charging request information comprising a requested service mode; and
step S20: allocating a mobile power bank to the user end on the basis of the requested service mode according to a preset mobile power bank allocation strategy.

Preferably, the service mode comprises a self-service mode and a sharing mode, wherein
when the service mode is the self-service mode, the charging request information further comprises an ID of a mobile power bank requested to be allocated; and
when the service mode is the sharing mode, the charging request information further comprises an ID and position information of a vehicle to be charged, and information about a remaining electricity quantity and a target electricity quantity of the vehicle to be charged.

Preferably, the preset mobile power bank allocation strategy comprises:
when the service mode is the self-service mode, if the mobile power bank requested to be allocated is in an idle state, allocating, to the user end, the mobile power bank requested to be allocated; otherwise, specifying a matching mobile power bank for the user end, and returning an ID of the mobile power bank; and
when the service mode is the sharing mode, selecting a matching mobile power bank for the user end according to the charging request information,
wherein
the mobile power bank requested to be allocated is a mobile power bank independently selected by the user end.

Preferably, when the requested service mode is the self-service mode, the step of "specifying a matching mobile power bank for the user end" specifically comprises:
acquiring the ID and the position information of the vehicle to be charged, and the information about the remaining electricity quantity and the target electricity quantity of the vehicle to be charged;
acquiring information about each mobile power bank that is currently in an idle state, wherein the information about the mobile power bank comprises an ID, position information, and electricity quantity information of the mobile power bank; and
specifying, for the user end from mobile power banks in an idle state that can meet a charging amount requirement, a mobile power bank closest to the vehicle to be charged according to the position information and the information about the remaining electricity quantity and the target electricity quantity of the vehicle to be charged, and the position information and the electricity quantity information of each mobile power bank that is currently in an idle state.

Preferably, said "selecting a matching mobile power bank for the user end according to the charging request information" further comprises:
acquiring information about each mobile power bank that is currently in an idle state, wherein the information about the mobile power bank comprises an ID, position information, and electricity quantity information of the mobile power bank; and
selecting, for the user end from mobile power banks in an idle state that can meet a charging amount requirement, a mobile power bank closest to the vehicle to be charged according to the position information and the information about the remaining electricity quantity and the target electricity quantity of the vehicle to be charged, and the position information and the electricity quantity information of each mobile power bank that is currently in an idle state.

Preferably, the method further comprises:
in the self-service mode, if it is determined that the mobile power bank that the user end requests to be allocated is in an idle state, returning request success information to the user end, so that the vehicle to be charged is charged in the self-service mode; and
in the sharing mode, selecting a service terminal according to the charging request information and position information of the allocated mobile power bank, so that the vehicle to be charged is charged in the sharing mode.

Preferably, "the vehicle to be charged being charged in the self-service mode" comprises:
driving, by a user, the vehicle to be charged to a position of the allocated mobile power bank for charging; or
transporting, by a user, the allocated mobile power bank to a position of the vehicle to be charged for charging; or
broadcasting, by the user end, a charging order, and transporting, by a service executor corresponding to a service terminal that acquires the charging order, the allocated mobile power bank to a position of the vehicle to be charged for charging.

Preferably, said "selecting a service terminal according to the charging request information and position information of the allocated mobile power bank, so that the vehicle to be charged is charged in the sharing mode" further comprises:
broadcasting the charging order to each service terminal according to the charging request information and the position information of the allocated mobile power bank; and
determining whether a current charging order is acquired by a service terminal, and if yes, sending, to the service terminal, guidance information corresponding to the mobile power bank and guidance information corresponding to the vehicle to be charged; otherwise, selecting a service terminal through assignment.

Preferably, the method further comprises:
after the charging ends, sending a reclaiming management instruction and reclaiming guidance information to a reclaiming management terminal or the service terminal or the user end according to the position information of the allocated mobile power bank and position information of a reclaiming management site, so that the allocated mobile power bank is transported to the reclaiming management site for storage, and a mobile power bank whose remaining electricity quantity is lower than a preset remaining electricity quantity threshold is charged; or after the charging ends, sending an automatic return instruction to the allocated mobile power bank, so that the allocated mobile power bank automatically returns to its original position.

Preferably, there may be one or more allocated mobile power banks; and when there are a plurality of allocated mobile power banks, the plurality of mobile power banks are connected in series or in parallel to provide a charging service for the vehicle to be charged.

According to a second aspect of the invention, a storage device storing a program is proposed, wherein the program is adapted to be loaded and executed by a processor to implement the scheduling method for a mobile power bank described above.

According to a third aspect of the invention, a processing device is proposed, comprising a processor and a memory, wherein
the processor is adapted to execute a program; and
the memory is adapted to store the program,
wherein the program is adapted to be loaded and executed by the processor to implement the scheduling method for a mobile power bank described above.

According to a fourth aspect of the invention, a scheduling server is proposed, the server comprising a charging request receiving module and an allocation module,
the charging request receiving module being configured to receive charging request information initiated by a user end, wherein the charging request information comprises a requested service mode; and
the allocation module communicatively connected to the charging request receiving module being configured to allocate a mobile power bank to the user end on the basis of the requested service mode according to a preset mobile power bank allocation strategy.

Preferably, the service mode comprises a self-service mode and a sharing mode, wherein
when the requested service mode is the self-service mode, the charging request information further comprises an ID of a mobile power bank requested to be allocated; and
when the requested service mode is the sharing mode, the charging request information further comprises an ID and position information of a vehicle to be charged, and information about a remaining electricity quantity and a target electricity quantity of the vehicle to be charged.

Preferably, the allocation module comprises a first allocation unit and a second allocation unit,
the first allocation unit being configured to: when the service mode is the self-service mode, if the mobile power bank requested to be allocated is in an idle state, allocate, to the user end, the mobile power bank requested to be allocated; otherwise, specify a matching mobile power bank for the user end, and return an ID of the mobile power bank, wherein the mobile power bank requested to be allocated is a mobile power bank independently selected by the user end; and
the second allocation unit being configured to: when the service mode is the sharing mode, select a matching mobile power bank for the user end according to the charging request information.

Preferably, the first allocation unit comprises a determination subunit, an allocation subunit, and a specifying subunit,
the determination subunit being configured to determine whether the mobile power bank requested to be allocated is in an idle state;
the allocation subunit being configured to: when the mobile power bank requested to be allocated is in an idle state, allocate, to the user end, the mobile power bank requested to be allocated; and
the specifying subunit being configured to: when the mobile power bank requested to be allocated is in a non-idle state, acquire the ID and the position information of the vehicle to be charged, and the information about the remaining electricity quantity and the target electricity quantity of the vehicle to be charged, and acquire information about each mobile power bank that is currently in an idle state, wherein the information about the mobile power bank comprises an ID, a position, and electricity quantity information of the mobile power bank; and specify, for the user end from mobile power banks in an idle state that can meet a charging amount requirement, a mobile power bank closest to the vehicle to be charged according to the position information and the information about the remaining electricity quantity and the target electricity quantity of the vehicle to be charged, and the position information and the electricity quantity information of each mobile power bank that is currently in an idle state, and return the ID of the mobile power bank.

Preferably, the second allocation unit comprises an information acquisition subunit and a selection subunit,
the information acquisition subunit being configured to acquire information about each mobile power bank that is currently in an idle state, wherein the information about the mobile power bank comprises an ID, a position, and electricity quantity information of the mobile power bank; and
the selection subunit being configured to select, for the user end from mobile power banks in an idle state that can meet a charging amount requirement, a mobile power bank closest to the vehicle to be charged according to the position information and the information about the remaining electricity quantity and the target electricity quantity of the vehicle to be charged, and the position information and the electricity quantity information of each mobile power bank that is currently in an idle state.

Preferably, the server further comprises a confirmation module and a service terminal selection module,
the confirmation module being configured to: in the self-service mode, if it is determined that the mobile power bank that the user end requests to be allocated is in an idle state, return request success information to the user end, so that the vehicle to be charged is charged in the self-service mode; and
the service terminal selection module being configured to: in the sharing mode, select a service terminal according to the charging request information and position information of the allocated mobile power bank, so that the vehicle to be charged is charged in the sharing mode.

Preferably, "the vehicle to be charged being charged in the self-service mode" comprises:
driving, by a user, the vehicle to be charged to a position of the allocated mobile power bank for charging; or
transporting, by a user, the allocated mobile power bank to a position of the vehicle to be charged for charging; or
broadcasting, by the user end, a charging order, and transporting, by a service executor corresponding to a service terminal that acquires the charging order, the allocated mobile power bank to a position of the vehicle to be charged for charging.

Preferably, the service terminal selection module comprises a broadcasting unit, a control unit, a guidance unit, and an assignment unit,
the broadcasting unit being configured to broadcast the charging order to each service terminal according to the charging request information and the position information of the allocated mobile power bank;
the control unit being configured to: determine whether a current charging order is acquired by a service terminal, and if yes, invoke the guidance unit; otherwise, invoke the assignment unit;
the guidance unit being configured to send, to the service terminal, guidance information corresponding to the mobile power bank and guidance information corresponding to the vehicle to be charged; and
the assignment unit being configured to select a service terminal through assignment.

Preferably, the server further comprises a reclaiming management module,
the reclaiming management module being configured to: after the charging ends, send a reclaiming management instruction and reclaiming guidance information to a reclaiming management terminal or the service terminal or the user end according to the position information of the allocated mobile power bank and position information of a reclaiming management site; or
after the charging ends, send an automatic return instruction to the allocated mobile power bank.

According to a fifth aspect of the invention, a scheduling system for a mobile power bank is proposed, comprising the scheduling server described above, and at least one mobile power bank,
the mobile power bank being configured to charge a vehicle to be charged.

Preferably, the system further comprises at least one user end,
the user end being configured to initiate a charging request to the server,
wherein the charging request information comprises a requested service mode.

Preferably, the system further comprises at least one service terminal,
the service terminal being configured to: receive a charging order broadcast by the server and perform an order acquisition operation; receive order assignment information sent by the server; receive a charging order broadcast by the user end and perform an order acquisition operation; and after acquiring an order successfully or receiving an assigned order, query and locate positions of the allocated mobile power bank, the user end, and the vehicle to be charged.

Preferably, the service terminal and/or the user end are/is further configured to receive a reclaiming management instruction and reclaiming guidance information sent by the server, to locate the mobile power bank according to the guidance information; and/or the scheduling system further comprises at least one reclaiming management terminal, the reclaiming management terminal being configured to receive the reclaiming management instruction and the reclaiming guidance information of the server, to locate the mobile power bank according to the guidance information.

Preferably, the system further comprises at least one transfer device, the transfer device being configured to transfer the mobile power bank; and/or the mobile power bank being provided with a transfer apparatus.

Preferably, the mobile power bank is further provided with a walking mechanism, which, during charging, is placed vertically next to the vehicle to be charged, or placed horizontally under a chassis of the vehicle to be charged; and/or
the mobile power bank uses a battery module as a main body, and charges the vehicle to be charged through an alternating-current interface or a direct-current interface, or charges the vehicle to be charged through a wireless charging module; the mobile power bank is further provided with a networked communication apparatus and a locating apparatus; and/or
when an electricity quantity of the mobile power bank is less than a preset remaining electricity quantity threshold, charging is performed through a charging device; and the charging device is provided with a networked communication apparatus and a locating apparatus.

Compared with the closest prior art, the invention has the following beneficial effects:
The scheduling method for a mobile power bank of the invention supports a sharing mode and a self-service mode. In the sharing mode, a user end initiates a charging request after parking at any position, and a server allocates a mobile power bank according to a position of a vehicle and a required charging capacity, and broadcasts a charging order for a service terminal to obtain, or selects a service terminal by assigning an order, so that a vehicle to be charged is charged. In the self-service mode, the user end selects a nearby mobile power bank according to its position and initiates a charging request, and after confirmation by the server, a user completes charging by himself/herself or with the assistance of a service executor requested through the user end. In addition, the invention further proposes a method for billing and reclaiming management after the charging ends, thereby forming a complete solution. The invention not only solves difficulties of users in finding charging piles, but also alleviates range anxiety, and the invention has high implementability.

### Brief Description of the Drawings

Fig. 1 is a schematic diagram of charging an electric vehicle with a mobile power bank according to an embodiment of the invention;
Fig. 2 is a schematic flowchart of a first embodiment of a scheduling method for a mobile power bank according to the invention;
Fig. 3 is a schematic flowchart of a second embodiment of the scheduling method for a mobile power bank according to the invention;
Fig. 4 is a schematic flowchart of a third embodiment of the scheduling method for a mobile power bank according to the invention;
Fig. 5 is a schematic composition diagram of an embodiment of a scheduling server for a mobile power bank according to the invention;
Fig. 6 is a schematic composition diagram of a first embodiment of a scheduling system for a mobile power bank according to the invention;
Fig. 7 is a schematic composition diagram of a second embodiment of the scheduling system for a mobile power bank according to the invention;
Fig. 8 is a schematic composition diagram of a third embodiment of the scheduling system for a mobile power bank according to the invention;
Fig. 9 is a schematic composition diagram of a fourth embodiment of the scheduling system for a mobile power bank according to the invention; and
Fig. 10 is a schematic composition diagram of a fifth embodiment of the scheduling system for a mobile power bank according to the invention.

### Detailed Description of Embodiments

Preferred implementations of the invention are described below with reference to the drawings. It should be understood by those skilled in the art that these embodiments are only for explaining the technical principles of the invention and are not intended to limit the scope of protection of the invention.

There is a correspondence between a "user end" and a "vehicle to be charged" mentioned in the embodiments of the invention, that is, the "user end" initiates a charging request with the purpose of charging the corresponding "vehicle to be charged". Therefore, the "user end" can be a mobile device such as a mobile phone, or a vehicle-mounted terminal. The "service executor" in the embodiments of the invention may be service personnel, or a robot capable of performing charging tasks. Therefore, the "service terminal" in the embodiments of the invention may be a mobile device such as a mobile phone held by service personnel, or a device provided on a robot or the like. In the embodiments, the "service personnel" and "reclaiming management personnel" respectively refer to the personnel who provide charging services and reclaiming management, and can be employees hired by the operator, or other personnel or volunteers who are suitable for temporarily performing this task in terms of time and geographic position and voluntarily participate.

The "mobile power bank" in the embodiments of the invention uses a battery module as a main body (in addition to a power module, a control unit, a communication module, a structural unit, etc.), which can store power and charge the vehicle to be charged through an alternating-current interface or a direct-current interface, or charge the vehicle to be charged through a wireless charging module; the mobile power bank is provided with a transfer apparatus or is moved through a transfer device; the mobile power bank is provided with a locating apparatus and a networked communication apparatus, and has GPS positioning and networking functions, so that the server, the service terminal, the user end, and the reclaiming management terminal can learn information such as a position, an electricity quantity, and a use status of the mobile power bank. The mobile power bank has a compact structure and a small size, and is provided with a walking mechanism (that is, wheels), which, during charging, can be placed vertically next to the vehicle to be charged, or placed horizontally under a chassis of the vehicle to be charged; and when an electricity quantity of the mobile power bank is less than a preset remaining electricity quantity threshold, charging is performed through a charging device (comprising structural parts, power units, control units, communication module groups, etc.).

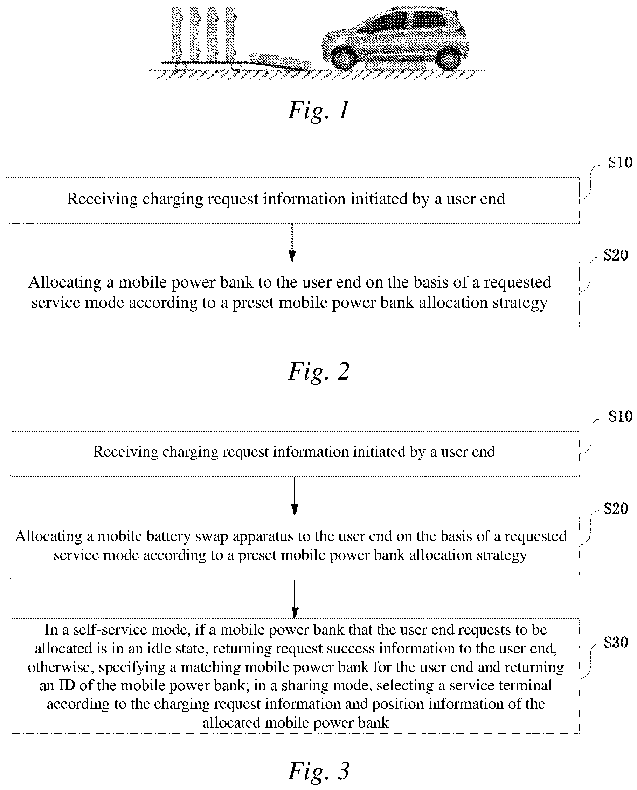

Fig. 1 is a schematic diagram of charging an electric vehicle with a mobile power bank. As shown in Fig. 1, a plurality of mobile power banks are transported to the side of a vehicle to be charged through a transfer device, and during charging, the mobile power banks are placed horizontally under a chassis of the vehicle for charging. In practical applications, according to a charging amount requirement of the vehicle to be charged, one or more mobile power banks may need to be allocated. When there are a plurality of allocated mobile power banks, the plurality of mobile power banks may be connected in series or in parallel to provide a charging service for the vehicle to be charged.

A charging device in the embodiments is further provided with a networked communication apparatus and a locating apparatus, and has networking and GPS positioning functions, so that a server, a service terminal, a reclaiming management terminal, and even a user end can learn information such as a position and a use status of the charging device. The structure thereof is compact and convenient to configure in residential areas or parking lots, and has good safety.

The "server" in this embodiment of the invention performs unified scheduling of mobile power banks and can support two service modes: a self-service mode and a sharing mode. A preset mobile power bank allocation strategy is as follows: In the self-service mode, the user end independently selects a mobile power bank according to a geographic position of the vehicle to be charged, and initiates a charging request to the server. If the server finds that the mobile power bank that the user end requests to be allocated is in an idle state, request success information is returned to the user end; otherwise the server will specify a matching mobile power bank for the user end. In the sharing mode, the user end directly initiates a charging request to the server, and the server selects a matching mobile power bank and a service terminal. The server can be implemented on a Linux system, using database tools such as MySQL for data storage and recording.

Fig. 2 is a schematic flowchart of a first embodiment of a scheduling method for a mobile power bank according to the invention. As shown in Fig. 2, the scheduling method of this embodiment comprises the following steps.

In step S10, a server receives charging request information initiated by a user end.

The charging request information comprises a requested service mode (a self-service mode or a sharing mode); and when the requested service mode is the self-service mode, the charging request information further comprises an ID of a mobile power bank requested to be allocated; and when the requested service mode is the sharing mode, the charging request information further comprises an ID and position information of a vehicle to be charged, and information about a remaining electricity quantity and a target electricity quantity of the vehicle to be charged.

In step S20, a mobile power bank is allocated to the user end on the basis of the requested service mode according to a preset mobile power bank allocation strategy. This step may further comprise steps S201 to S203.

In step S201, whether the requested service mode is the self-service mode is determined, and if yes, the method proceeds to step S202; otherwise, proceeds to step S203.

In step S202, whether the mobile power bank requested to be allocated is in an idle state is determined, and if yes, the mobile power bank requested to be allocated is allocated to the user end; otherwise, a matching mobile power bank is specified for the user end, and an ID of the mobile power bank is returned.

The mobile power bank requested to be allocated is a mobile power bank independently selected by the user end that currently initiates the charging request, but same is officially allocated to the user end only after confirmation by the server.

Specifically, the method for the user end to independently select the mobile power bank in this embodiment may comprise: acquiring, by the user end, an ID and position information, electricity quantity information, etc. of each mobile power bank that is currently in an idle state; and selecting, from mobile power banks in an idle state that can meet a charging amount requirement, a mobile power bank closest to the vehicle to be charged according to the acquired ID and position information, and electricity quantity information of the mobile power bank, and the position information and the information about the remaining electricity quantity and the target electricity quantity of the vehicle to be charged.

In step S203, a matching mobile power bank is selected for the user end according to the charging request information. This step may further comprise steps S2031 and S2032.

In step S2031, information about each mobile power bank that is currently in an idle state is acquired, the information about the mobile power bank comprising the ID, the position information, and the electricity quantity information of the mobile power bank.

In step S2032, the mobile power bank closest to the vehicle to be charged is selected for the user end from mobile power banks in an idle state that can meet the charging amount requirement and same is allocated, according to the position information and the information about the remaining electricity quantity and the target electricity quantity of the vehicle to be charged, and the position information and the electricity quantity information of each mobile power bank that is currently in an idle state.

After a mobile power bank is allocated to a user end, a correspondence between the mobile power bank and the user end is recorded in the server, so as to ensure that the mobile power bank will not be repeatedly allocated to other user ends. Such a correspondence will not be canceled until the current charging task is completed.

In this embodiment, the step of specifying, by the server, a matching mobile power bank for the current user end specifically comprises:
acquiring the ID and the position information of the vehicle to be charged, and the information about the remaining electricity quantity and the target electricity quantity of the vehicle to be charged;
acquiring information about each mobile power bank that is currently in an idle state, wherein the information about the mobile power bank comprises an ID, position information, and electricity quantity information of the mobile power bank; and

specifying, for the user end from mobile power banks in an idle state that can meet a charging amount requirement, a mobile power bank closest to the vehicle to be charged according to the position information and the information about the remaining electricity quantity and the target electricity quantity of the vehicle to be charged, and the position information and the electricity quantity information of each mobile power bank that is currently in an idle state.

Fig. 3 is a schematic flowchart of a second embodiment of the scheduling method for a mobile power bank according to the invention. As shown in Fig. 3, compared with the first embodiment, the scheduling method of this embodiment further comprises the steps of performing subsequent charging services after allocating the mobile power bank.

In step S30, in the self-service mode, if it is determined that the mobile power bank that the user end requests to be allocated is in an idle state, the server returns request success information to the user end, so that the vehicle to be charged is charged in the self-service mode; in the sharing mode, the server selects a service terminal according to the charging request information and position information of the allocated mobile power bank, so that the vehicle to be charged is charged in the sharing mode.

Specifically, in the self-service mode, a user drives the vehicle to be charged to a position of the allocated mobile power bank for charging; or a user transports the allocated mobile power bank to a position of the vehicle to be charged for charging; or the user end broadcasts a charging order, and a service executor corresponding to a service terminal that acquires the charging order transports the allocated mobile power bank to the position of the vehicle to be charged for charging.

Specifically, in the sharing mode, the server broadcasts the charging order to each service terminal according to the charging request information and the position information of the allocated mobile power bank; and then determines whether a current charging order is acquired by a service terminal, and if yes, sends, to the service terminal, guidance information corresponding to the mobile power bank and guidance information corresponding to the vehicle to be charged; otherwise, selects a service terminal through assignment; and after the service terminal is selected, a service executor corresponding to the service terminal provides charging services for the vehicle to be charged.

The step of selecting a service terminal through assignment may further comprise:
acquiring position information of each service terminal that is currently in an idle state; selecting a service terminal closest to the allocated mobile power bank according to the position information of the allocated mobile power bank and the position information of each service terminal that is currently in an idle state; and sending the charging request information and the information about the mobile power bank to the selected service terminal, and sending the guidance information corresponding to the mobile power bank and the guidance information corresponding to the vehicle to be charged. Furthermore, the service executor corresponding to the service terminal transports the allocated mobile power bank to the side of the vehicle to be charged and performs a charging service.

The scheduling method for a mobile power bank of this embodiment may further comprise the step of billing:
after charging completion information sent by the user end is received, billing the user end; or after charging completion information sent by the service terminal is received, billing the user end through the service terminal.

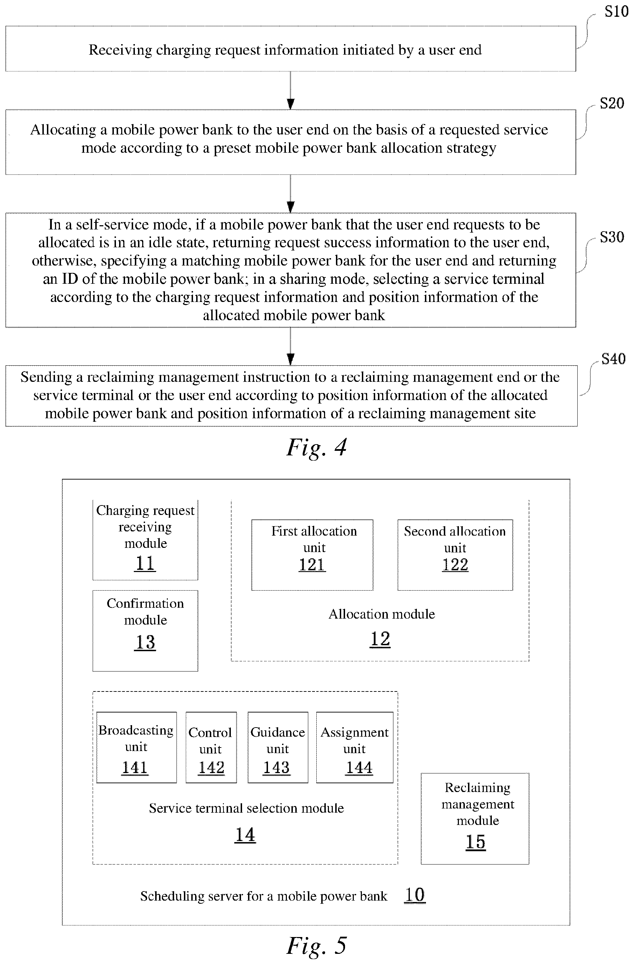

Fig. 4 is a schematic flowchart of a third embodiment of the scheduling method for a mobile power bank according to the invention. As shown in Fig. 4, compared with the second embodiment, the scheduling method of this embodiment further comprises the step of performing mobile power bank reclaiming management.

In step S40, a reclaiming management instruction and reclaiming guidance information are sent to a reclaiming management terminal or the service terminal or the user end according to the position information of the allocated mobile power bank and position information of a reclaiming management site, so that the allocated mobile power bank is transported to the reclaiming management site for storage, and a mobile power bank whose remaining electricity quantity is lower than a preset remaining electricity quantity threshold is charged; and if the mobile power bank has automatic positioning and movement functions, after the charging ends, the server may send an automatic return instruction to the allocated mobile power bank, so that the allocated mobile power bank automatically returns to its original position.

The reclaiming management site comprises: a centralized site or a distributed site. The centralized site means that reclaiming management sites are centrally arranged in the same place, and reclaiming can be completed by the reclaiming management terminal or the service terminal. The distributed site means that reclaiming management sites are scattered in different places, such as special sites opened up by residential properties, streets, etc., to store mobile power banks and charge mobile power banks whose remaining electricity quantity is less than the preset remaining electricity quantity threshold. At such sites, reclaiming can be performed by reclaiming management personnel or service executors, or by users.

Although the steps are described in order in the above scheduling method embodiment, those skilled in the art can understand that in order to achieve the effects of this embodiment, different steps are not necessarily performed in this order, but can be performed simultaneously (in parallel) or in reverse order, and these simple variations all fall within the scope of protection of the invention.

Based on the above scheduling method, the invention further proposes an embodiment of a storage device storing a program, wherein the program is adapted to be loaded and executed by a processor to implement the scheduling method for a mobile power bank described above.

Further, the invention further proposes an embodiment of a processing device, which comprises a processor and a memory, wherein the processor is adapted to execute a program; and the memory is adapted to store the program, wherein the program is adapted to be loaded and executed by the processor to implement the scheduling method for a mobile power bank described above.

On the basis of the same technical concept as the above scheduling method embodiment, the invention further proposes a scheduling server, which will be described below with reference to Fig. 5.

Fig. 5 is a main schematic composition diagram of an embodiment of a scheduling server for a mobile power bank according to the invention. As shown in Fig. 5, the server 10 of this embodiment comprises a charging request receiving module 11, an allocation module 12, a confirmation module 13, a service terminal selection module 14, and a reclaiming management module 15.

The charging request receiving module 11 is configured to receive charging request information initiated by a user end, the charging request information comprising a requested service mode (when the requested service mode is a self-service mode, the charging request information further comprises an ID of a mobile power bank requested to be allocated; and when the requested service mode is a sharing mode, the charging request information further comprises an ID and position information of a vehicle to be charged, and information about a remaining electricity quantity and a target electricity quantity of the vehicle to be charged). The allocation module 12 communicatively connected to the charging request receiving module 11 is configured to allocate a mobile power bank to the user end on the basis of the requested service mode according to a preset mobile power bank allocation strategy. The confirmation module 13 is configured to: in the self-service mode, if it is determined that the mobile power bank that the user end requests to be allocated is in an idle state, return request success information to the user end, so that the vehicle to be charged is charged in the self-service mode. The service terminal selection module 14 is configured to: in the sharing mode, select a service terminal according to the charging request information and position information of the allocated mobile power bank, so that the vehicle to be charged is charged in the sharing mode. The reclaiming management module 15 is configured to: after the charging ends, send a reclaiming management instruction and reclaiming guidance information to a reclaiming management terminal or the service terminal or the user end, or send an automatic return instruction to the allocated mobile power bank, according to the position information of the allocated mobile power bank and position information of a reclaiming management site.

In this embodiment, the allocation module 12 comprises a first allocation unit 121 and a second allocation unit 122.

The first allocation unit 121 is configured to: when the service mode is the self-service mode, if the mobile power bank requested to be allocated is in an idle state, allocate, to the user end, the mobile power bank requested to be allocated; otherwise, a matching mobile power bank is specified for the user end, and an ID of the mobile power bank is returned. The mobile power bank requested to be allocated is a mobile power bank independently selected by the user end. The second allocation unit 122 is configured to: when the service mode is the sharing mode, select a matching mobile power bank for the user end according to the charging request information.

The first allocation unit 121 comprises a determination subunit, an allocation subunit, and a specifying subunit.

The determination subunit is configured to determine whether the mobile power bank requested to be allocated is in an idle state. The allocation subunit is configured to: when the mobile power bank requested to be allocated is in an idle state, allocate, to the user end, the mobile power bank requested to be allocated. The specifying subunit is configured to: when the mobile power bank requested to be allocated is in a non-idle state, acquire the ID and the position information of the vehicle to be charged, and the information about the remaining electricity quantity and the target electricity quantity of the vehicle to be charged, and acquire information about each mobile power bank that is currently in an idle state, the information about the mobile power bank comprising an ID, position information, and electricity quantity information of the mobile power bank; and specify, for the user end from mobile power banks in an idle state that can meet a charging amount requirement, a mobile power bank closest to the vehicle to be charged according to the position information and the information about the remaining electricity quantity and the target electricity quantity of the vehicle to be charged, and the position information and the electricity quantity information of each mobile power bank that is currently in an idle state, and return the ID of the mobile power bank.

Specifically, the second allocation unit 122 comprises an information acquisition subunit and a selection subunit.

The information acquisition subunit is configured to acquire information about each mobile power bank that is currently in an idle state, wherein the information about the mobile power bank comprises an ID and position information, and electricity quantity information of the mobile power bank. The selection subunit is configured to select, for the user end from mobile power banks in an idle state that can meet a charging amount requirement, a mobile power bank closest to the vehicle to be charged according to the position information and the information about the remaining electricity quantity and the target electricity quantity of the vehicle to be charged, and the position information and the electricity quantity information of each mobile power bank that is currently in an idle state.

In this embodiment, the service terminal selection module 14 comprises a broadcasting unit 141, a control unit 142, a guidance unit 143, and an assignment unit 144.

The broadcasting unit 141 is configured to broadcast the charging order to each service terminal according to the charging request information and the position information of the allocated mobile power bank. The control unit 142 is configured to: determine whether a current charging order is acquired by a service terminal, and if yes, invoke the guidance unit 143, otherwise, invoke the assignment unit 144. The guidance unit 143 is configured to send, to the service terminal, guidance information corresponding to the mobile power bank and guidance information corresponding to the vehicle to be charged. The assignment unit 144 is configured to select a service terminal through assignment.

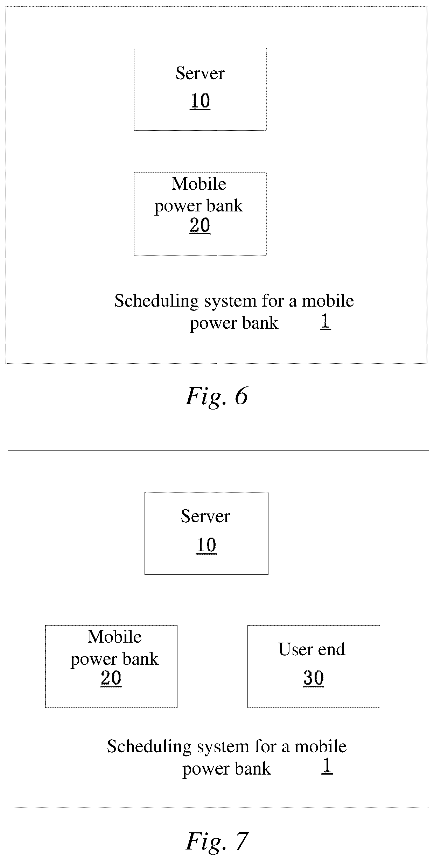

Further, on the basis of the above server, the invention further proposes a scheduling system for a mobile power bank, which will be described below with reference to Figs. 6 to 10.

Fig. 6 is a schematic composition diagram of a first embodiment of a scheduling system for a mobile power bank according to the invention. As shown in Fig. 6, the scheduling system 1 of this embodiment comprises a server 10 and at least one mobile power bank 20.

The server 10 is configured to: receive charging request information initiated by a user end, and allocate a mobile power bank 20 to the user end on the basis of the requested service mode according to a preset mobile power bank allocation strategy. The specific structure and function thereof are the same as those in the server embodiment described above, and will not be described herein again. The mobile power bank 20 is configured to charge a vehicle to be charged.

Fig. 7 is a schematic composition diagram of a second embodiment of the scheduling system for a mobile power bank according to the invention. As shown in Fig. 7, compared with the above first embodiment of the scheduling system, the scheduling system of this embodiment further comprises at least one user end 30.

The user end 30 is configured to initiate a charging request to the server 10.

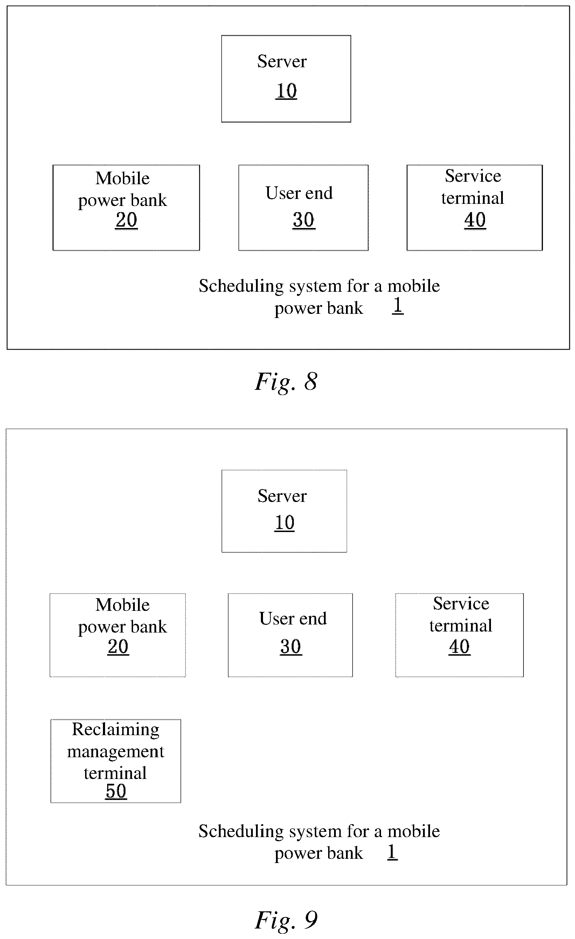

Fig. 8 is a schematic composition diagram of a third embodiment of the scheduling system for a mobile power bank according to the invention. As shown in Fig. 8, compared with the above second embodiment of the scheduling system, the scheduling system of this embodiment further comprises at least one service terminal 40.

The service terminal 40 is configured to: receive a charging order broadcast by the server 10 and perform an order acquisition operation; receive order assignment information sent by the server 10; receive a charging order broadcast by the user end 30 and perform an order acquisition operation; and after acquiring an order successfully or receiving an assigned order, query and locate positions of the allocated mobile power bank 20, the user end 30, and the vehicle to be charged.

Fig. 9 is a schematic composition diagram of a fourth embodiment of the scheduling system for a mobile power bank according to the invention. As shown in Fig. 9, compared with the above third embodiment of the scheduling system, the scheduling system of this embodiment considers the reclaiming management of mobile power banks. The service terminal 40 and/or the user end 30 and/or the reclaiming management terminal 50 may be used to receive the server's reclaiming management instruction, which is specifically as follows.

The service terminal 40 and/or the user end 30 are/is further configured to receive the reclaiming management instruction and the reclaiming guidance information sent by the server 10. Further, the service executor or the user transports the mobile power bank 20 specified by the instruction to the reclaiming management site for storage, and uses a charging device to charge a mobile power bank whose remaining electricity quantity is lower than a preset remaining electricity quantity threshold. In a sharing mode, reclaiming and charging are usually completed by the service executor; and in a self-service mode, the actions of reclaiming and charging can be completed by the user or by the service executor. A specifically used method depends on the reclaiming management instruction sent by the server 10.

The scheduling system for a mobile power bank of this embodiment may further comprise at least one reclaiming management terminal 50.

The reclaiming management terminal 50 is configured to receive the reclaiming management instruction and the reclaiming guidance information of the server 10. Further, the reclaiming management personnel reclaim the mobile power bank 20 to the reclaiming management site for storage, and use a charging device to charge a mobile power bank whose remaining electricity quantity is lower than a preset remaining electricity quantity threshold.

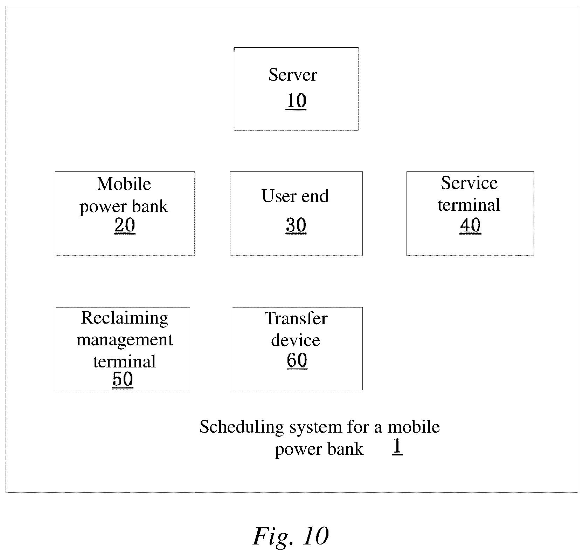

Fig. 10 is a schematic composition diagram of a fifth embodiment of the scheduling system for a mobile power bank according to the invention. As shown in Fig. 10, compared with the above fourth embodiment of the scheduling system, the scheduling system further comprises at least one transfer device 60.

The transfer device 60 is configured to transport the mobile power bank 20 to a destination. For example, when preparing for charging, the allocated mobile power bank 20 is transported to the position of the vehicle to be charged; and after the charging is completed, same is transported to the reclaiming management site. The mobile power bank with its own transfer function can be transported without using the transfer device 60, and certainly, it can also be transported using the transfer device, to shorten the transport time.

The mobile power bank in the embodiments of the invention can also be replaced by a mobile charging vehicle, which can also perform charging services for electric vehicles. The mobile power bank can also be replaced by a mobile battery swap apparatus. When the battery swap apparatus reaches a position of an under-voltage vehicle, a traction battery is directly replaced, so that the electric vehicle can faster get back on the road for traveling.

Those skilled in the art should be able to realize that the method steps and system constituent units of the various examples described in conjunction with the embodiments disclosed herein can be implemented in electronic hardware, computer software or a combination of both. To clearly illustrate the interchangeability of electronic hardware and software, the compositions and steps of the various examples have been generally described in terms of functionality in the above description. Whether these functions are performed in electronic hardware or software depends on the specific application and design constraints of the technical solution. Those skilled in the art can use different methods to implement the described functions for each particular application, but such implementation should not be considered to be beyond the scope of the invention.

Heretofore, the technical solutions of the invention have been described in conjunction with the preferred implementations shown in the drawings; however, those skilled in the art can readily understand that the protection scope of the invention is obviously not limited to these specific implementations. Without departing from the principle of the invention, a person skilled in the art may make equivalent modifications or substitutions to related technical features, and the technical solutions after these modifications or substitutions shall fall within the protection scope of the invention.

## Claims

1. A scheduling method for a mobile power bank, comprising the following steps:
step S10: receiving charging request information initiated by a user end, the charging request information comprising a requested service mode; and
step S20: allocating a mobile power bank to the user end on the basis of the requested service mode according to a preset mobile power bank allocation strategy.

2. The scheduling method according to claim 1, the service mode comprising a self-service mode and a sharing mode, wherein
when the service mode is the self-service mode, the charging request information further comprises an ID of a mobile power bank requested to be allocated; and
when the service mode is the sharing mode, the charging request information further comprises an ID and position information of a vehicle to be charged, and information about a remaining electricity quantity and a target electricity quantity of the vehicle to be charged.

3. The scheduling method according to claim 2, the preset mobile power bank allocation strategy comprising:
when the service mode is the self-service mode, if the mobile power bank requested to be allocated is in an idle state, allocating, to the user end, the mobile power bank requested to be allocated; otherwise, specifying a matching mobile power bank for the user end, and returning an ID of the mobile power bank; and
when the service mode is the sharing mode, selecting a matching mobile power bank for the user end according to the charging request information,
wherein
the mobile power bank requested to be allocated is a mobile power bank independently selected by the user end.

4. The scheduling method according to claim 3, wherein when the requested service mode is the self-service mode, the step of "specifying a matching mobile power bank for the user end" specifically comprises:
acquiring the ID and the position information of the vehicle to be charged, and the information about the remaining electricity quantity and the target electricity quantity of the vehicle to be charged;
acquiring information about each mobile power bank that is currently in an idle state, wherein the information about the mobile power bank comprises an ID, position information, and electricity quantity information of the mobile power bank; and
specifying, for the user end from mobile power banks in an idle state that can meet a charging amount requirement, a mobile power bank closest to the vehicle to be charged according to the position information and the information about the remaining electricity quantity and the target electricity quantity of the vehicle to be charged, and the position information and the electricity quantity information of each mobile power bank that is currently in an idle state.

5. The scheduling method according to claim 3, wherein said "selecting a matching mobile power bank for the user end according to the charging request information" further comprises:
acquiring information about each mobile power bank that is currently in an idle state, wherein the information about the mobile power bank comprises an ID, position information, and electricity quantity information of the mobile power bank; and
selecting, for the user end from mobile power banks in an idle state that can meet a charging amount requirement, a mobile power bank closest to the vehicle to be charged according to the position information and the information about the remaining electricity quantity and the target electricity quantity of the vehicle to be charged, and the position information and the electricity quantity information of each mobile power bank that is currently in an idle state.

6. The scheduling method according to claim 3, further comprising:
in the self-service mode, if it is determined that the mobile power bank that the user end requests to be allocated is in an idle state, returning request success information to the user end, so that the vehicle to be charged is charged in the self-service mode; and
in the sharing mode, selecting a service terminal according to the charging request information and position information of the allocated mobile power bank, so that the vehicle to be charged is charged in the sharing mode.

7. The scheduling method according to claim 6, wherein "the vehicle to be charged being charged in the self-service mode" comprises:
driving, by a user, the vehicle to be charged to a position of the allocated mobile power bank for charging; or
transporting, by a user, the allocated mobile power bank to a position of the vehicle to be charged for charging; or
broadcasting, by the user end, a charging order, and transporting, by a service executor corresponding to a service terminal that acquires the charging order, the allocated mobile power bank to a position of the vehicle to be charged for charging.

8. The scheduling method according to claim 6, wherein said "selecting a service terminal according to the charging request information and position information of the allocated mobile power bank, so that the vehicle to be charged is charged in the sharing mode" further comprises:
broadcasting a charging order to each service terminal according to the charging request information and the position information of the allocated mobile power bank; and
determining whether a current charging order is acquired by a service terminal, and if yes, sending, to the service terminal, guidance information corresponding to the mobile power bank and guidance information corresponding to the vehicle to be charged; otherwise, selecting a service terminal through assignment.

9. The scheduling method according to any one of claims 1 to 8, further comprising:
after the charging ends, sending a reclaiming management instruction and reclaiming guidance information to a reclaiming management terminal or the service terminal or the user end according to the position information of the allocated mobile power bank and position information of a reclaiming management site, so that the allocated mobile power bank is transported to the reclaiming management site for storage, and a mobile power bank whose remaining electricity quantity is lower than a preset remaining electricity quantity threshold is charged; or
after the charging ends, sending an automatic return instruction to the allocated mobile power bank, so that the allocated mobile power bank automatically returns to its original position.

10. The scheduling method according to any one of claims 1 to 8, wherein there may be one or more allocated mobile power banks; and when there are a plurality of allocated mobile power banks, the plurality of mobile power banks are connected in series or in parallel to provide a charging service for the vehicle to be charged.

11. A storage device storing a program, wherein the program is adapted to be loaded and executed by a processor to implement a scheduling method for a mobile power bank according to any one of claims 1 to 10.

12. A processing device, comprising a processor and a memory, wherein
the processor is adapted to execute a program; and
the memory is adapted to store the program,
wherein the program is adapted to be loaded and executed by the processor to implement a scheduling method for a mobile power bank according to any one of claims 1 to 10.

13. A scheduling server, comprising: a charging request receiving module and an allocation module,
the charging request receiving module being configured to receive charging request information initiated by a user end, wherein the charging request information comprises a requested service mode; and
the allocation module communicatively connected to the charging request receiving module being configured to allocate a mobile power bank to the user end on the basis of the requested service mode according to a preset mobile power bank allocation strategy.

14. The server according to claim 13, the service mode comprising a self-service mode and a sharing mode, wherein
when the requested service mode is the self-service mode, the charging request information further comprises an ID of a mobile power bank requested to be allocated; and
when the requested service mode is the sharing mode, the charging request information further comprises an ID and position information of a vehicle to be charged, and information about a remaining electricity quantity and a target electricity quantity of the vehicle to be charged.

15. The server according to claim 14, the allocation module comprising: a first allocation unit and a second allocation unit,
the first allocation unit being configured to: when the service mode is the self-service mode, if the mobile power bank requested to be allocated is in an idle state, allocate, to the user end, the mobile power bank requested to be allocated; otherwise, specify a matching mobile power bank for the user end, and return an ID of the mobile power bank, wherein the mobile power bank requested to be allocated is a mobile power bank independently selected by the user end; and
the second allocation unit being configured to: when the service mode is the sharing mode, select a matching mobile power bank for the user end according to the charging request information.

16. The server according to claim 15, the first allocation unit comprising a determination subunit, an allocation subunit, and a specifying subunit,
the determination subunit being configured to determine whether the mobile power bank requested to be allocated is in an idle state;
the allocation subunit being configured to: when the mobile power bank requested to be allocated is in an idle state, allocate, to the user end, the mobile power bank requested to be allocated; and
the specifying subunit being configured to: when the mobile power bank requested to be allocated is in a non-idle state, acquire the ID and the position information of the vehicle to be charged, and the information about the remaining electricity quantity and the target electricity quantity of the vehicle to be charged, and acquire information about each mobile power bank that is currently in an idle state, wherein the information about the mobile power bank comprises an ID, a position, and electricity quantity information of the mobile power bank; and specify, for the user end from mobile power banks in an idle state that can meet a charging amount requirement, a mobile power bank closest to the vehicle to be charged according to the position information and the information about the remaining electricity quantity and the target electricity quantity of the vehicle to be charged, and the position information and the electricity quantity information of each mobile power bank that is currently in an idle state, and return the ID of the mobile power bank.

17. The server according to claim 15, the second allocation unit comprising an information acquisition subunit and a selection subunit,
the information acquisition subunit being configured to acquire information about each mobile power bank that is currently in an idle state, wherein the information about the mobile power bank comprises an ID, a position, and electricity quantity information of the mobile power bank; and
the selection subunit being configured to select, for the user end from mobile power banks in an idle state that can meet a charging amount requirement, a mobile power bank closest to the vehicle to be charged according to the position information and the information about the remaining electricity quantity and the target electricity quantity of the vehicle to be charged, and the position information and the electricity quantity information of each mobile power bank that is currently in an idle state.

18. The server according to claim 15, further comprising a confirmation module and a service terminal selection module,
the confirmation module being configured to: in the self-service mode, if it is determined that the mobile power bank that the user end requests to be allocated is in an idle state, return request success information to the user end, so that the vehicle to be charged is charged in the self-service mode; and
the service terminal selection module being configured to: in the sharing mode, select a service terminal according to the charging request information and position information of the allocated mobile power bank, so that the vehicle to be charged is charged in the sharing mode.

19. The server according to claim 18, "the vehicle to be charged being charged in the self-service mode" comprises:
driving, by a user, the vehicle to be charged to a position of the allocated mobile power bank for charging; or
transporting, by a user, the allocated mobile power bank to a position of the vehicle to be charged for charging; or
broadcasting, by the user end, a charging order, and transporting, by a service executor corresponding to a service terminal that acquires the charging order, the allocated mobile power bank to a position of the vehicle to be charged for charging.

20. The server according to claim 18, the service terminal selection module comprising a broadcasting unit, a control unit, a guidance unit, and an assignment unit,
the broadcasting unit being configured to broadcast the charging order to each service terminal according to the charging request information and the position information of the allocated mobile power bank;
the control unit being configured to: determine whether a current charging order is acquired by a service terminal, and if yes, invoke the guidance unit; otherwise, invoke the assignment unit;
the guidance unit being configured to send, to the service terminal, guidance information corresponding to the mobile power bank and guidance information corresponding to the vehicle to be charged; and
the assignment unit being configured to select a service terminal through assignment.

21. The server according to claim 18, further comprising a reclaiming management module,
the reclaiming management module being configured to: after the charging ends, send a reclaiming management instruction and reclaiming guidance information to a reclaiming management terminal or the service terminal or the user end according to the position information of the allocated mobile power bank and position information of a reclaiming management site; or
after the charging ends, send an automatic return instruction to the allocated mobile power bank.

22. A scheduling system for a mobile power bank, comprising a scheduling server according to any one of claims 13 to 21, and at least one mobile power bank,
the mobile power bank being configured to charge a vehicle to be charged.

23. The scheduling system according to claim 22, further comprising at least one user end,
the user end being configured to initiate a charging request to the server,
wherein the charging request information comprises a requested service mode.

24. The scheduling system according to claim 23, further comprising at least one service terminal,
the service terminal being configured to: receive a charging order broadcast by the server and perform an order acquisition operation; receive order assignment information sent by the server; receive a charging order broadcast by the user end and perform an order acquisition operation; and after acquiring an order successfully or receiving an assigned order, query and locate positions of the allocated mobile power bank, the user end, and the vehicle to be charged.

25. The scheduling system according to claim 24, the service terminal and/or the user end being further configured to receive a reclaiming management instruction and reclaiming guidance information sent by the server, to locate the mobile power bank according to the guidance information; and/or
the scheduling system further comprising at least one reclaiming management terminal, the reclaiming management terminal being configured to receive the reclaiming management instruction and the reclaiming guidance information of the server, to locate the mobile power bank according to the guidance information.

26. The scheduling system according to claim 25, further comprising at least one transfer device, the transfer device being configured to transfer the mobile power bank; and/or
the mobile power bank being provided with a transfer apparatus.

27. The scheduling system according to any one of claims 22 to 26, wherein the mobile power bank is further provided with a walking mechanism, which, during charging, is placed vertically next to the vehicle to be charged, or placed horizontally under a chassis of the vehicle to be charged; and/or
the mobile power bank uses a battery module as a main body, and charges the vehicle to be charged through an alternating-current interface or a direct-current interface, or charges the vehicle to be charged through a wireless charging module; the mobile power bank is further provided with a networked communication apparatus and a locating apparatus; and/or
when an electricity quantity of the mobile power bank is less than a preset remaining electricity quantity threshold, charging is performed through a charging device; and the charging device is provided with a networked communication apparatus and a locating apparatus.
